# EUROPEAN PATENT SPECIFICATION

(11) **EP 2 633 308 B1**
(45) Date of publication and mention of the grant of the patent: **29.07.2015**
(21) Application number: 11776148.6
(22) Date of filing: 25.10.2011
(51) Int. Cl.: G01N 30/68

(54) **COUNTERFLOW BURNER FOR A FLAME IONIZATION DETECTOR**
GEGENSTROMBRENNER FÜR EINEN FLAMMENIONISATIONSDETEKTOR
BRÛLEUR À CONTRE-COURANT POUR DÉTECTEUR À IONISATION DE FLAMME

(30) Priority: 27.10.2010 EP 10189026
(43) Date of publication of application: 04.09.2013
(73) Proprietor: Bayer Intellectual Property GmbH, 40789 Monheim am Rhein (DE); KROHNE Messtechnik GmbH, 47058 Duisburg (DE)
(72) Inventor: MÜLLER, Jörg, 21244 Buchholz (DE); KUIPERS, Winfred, 22765 Hamburg (DE)
(74) Representative: BIP Patents
(86) International application number: PCT/EP2011/068590
(87) International publication number: WO 2012/055835

(56) References cited:
- EP-A1- 2 037 264
- KUIPERS W J ET AL: "Influence of Micro-Burner Geometry on Flame Stability", MIKROSYSTEMTECHNIK KONGRESS 2009; 12.-14. OKTOBER 2009 / BERLIN, PROCEEDINGS, VDE VERLAG GMBH, BERLIN OFFENBACH, PAPER P2.1/1,, 2009, pages 1-4, XP009143315, ISBN: 978-3-8007-3183-1
- KUIPERS W J; MUELLER J: "Total Hydrocarbon Analysis with a Planar Micro Flame Ionization Detector", IEEE SENSORS 2009; 25.-28. OKTOBER 2009 / CHRISTCHURCH, PROCEEDINGS, 22 January 2010 (2010-01-22), pages 1939-1942, XP002617323, ISSN: 1939-0395, DOI: 10.1109/ICSENS.2009.5398348

## Description

The present invention relates to a counterflow burner, to a flame ionization detector in which the counterflow burner is fitted, and to a method for the analysis of gases.

Flame ionization detectors (FIDs) are widely known (see for example US 3,585,003, US 4,182,740).

FIDs are used in a variety of ways in the chemical and biochemical industry and in environmental protection, sometimes as detectors in a gas chromatograph or as separate sensors for monitoring the amount of unburnt hydrocarbons.

An FID comprises a burner in which a flame is generated from a burnable mixture of combustible gas (usually hydrogen) and oxidant (usually oxygen or air). A gas sample, the concentration of which is intended to be measured or monitored, can be fed to the burner. The measurement principle of the FID is based on ions being formed in the flame by the gas sample. The flame burns between two electrodes, to which a DC voltage is applied. The ions created in the flame lead to charge transport, which can be measured as an ion current.

A disadvantage with the use of an FID, for example in comparison with a thermal conductivity detector, is the relatively high consumption of combustible gas and oxidant. Since the gases normally used, i.e. hydrogen and oxygen, can form explosive mixtures, FIDs also entail certain safety risks.

One possible way of reducing the safety risks and the gas consumption consists in miniaturizing the FID. US 2008/0213908 A1, for example, discloses a miniaturized FID (µFID). It is characterized in that the combustion chamber is enclosed by a stainless steel capillary. Although the production of corresponding small capillaries is possible, assembly of the combustion chamber, which consists of different parts, nevertheless involves considerable difficulties and costs, in particular when extremely small structures are used and these are intended to be mass-produced. Furthermore, a capillary extends in only one direction, i.e. it is essentially a one-dimensional structure, so that there are only few possible ways of controlling the flame.

On the basis of the known prior art, it is an object to provide a flame ionization detector having high sensitivity together with low consumption of combustible gas and oxidant. The FID is intended to be economically mass-producible and have small dimensions, so that it can be used in a variety of ways.

According to the invention, this object is achieved by an FID according to Claim 1. A counterflow burner is an integral component of the FID according to the invention. The present invention therefore likewise relates to such a counterflow burner. The present invention furthermore relates to a method for the analysis of gases according to Claim 5. Preferred embodiments may be found in the respective dependent claims.

The counterflow burner used in the invention comprises three planar substrates which are connected together while lying above one another. The central substrate comprises a combustion chamber. Combustible gas and oxidant are preferably supplied to the combustion chamber through separate channels.

The upper and lower substrates preferably fully close the combustion chamber in the central substrate. The supply of combustible gas and oxidant and the discharge of waste gases therefore preferably take place in the plane of the central substrate.

The channels open into the combustion chamber from opposite directions.

When combustible gas and oxidant (for example hydrogen and oxygen) collide from opposite directions, their momenta at least partially cancel each other out. A flame shape is thus obtained which can be configured not only in an elongate fashion but also spherically. This is not the case with a premixed flame, because then the two gases flow essentially in one direction.

The spherical shape is particularly favourable for the flame stability owing to the minimal surface area through which the heat can be emitted, in comparison with the volume in which the heat is generated.

The openings of the channels into the combustion chamber are also referred to here as nozzles. It has been found that the distance between the opposite nozzles, through which gases are fed into the combustion chamber, has an effect on the sensitivity of an FID. It has also been found that the size of the nozzle openings has an effect on the sensitivity of an FID.

The distance between opposing nozzles is preferably less than 3 mm, particularly preferably less than 2 mm and more particularly preferably less than 1.5 mm.

The size of the nozzle opening preferably lies in the range of from 0.005 mm² to 0.08 mm², particularly preferably in the range of from 0.005 mm² to 0.06 mm² and more particularly preferably in the range of from 0.01 mm² to 0.04 mm².

Experimentally, a maximum sensitivity of 11 mC/gC was achieved with a distance of 1 mm between the nozzles and a nozzle opening having a size of 0.03 mm². This sensitivity was reached with equal volume flow rates of 7.5 ml/min for hydrogen and oxygen. Conventional FIDs reach comparable sensitivities, but they are operated with higher volume flow rates of about 30 ml/min for H₂ and 300 ml/min for air.

The sensitivity of an FID is defined as the ion current (units A = C/s) divided by the carbon mass flow rate (units gC/s). Further details about measuring the sensitivities of FIDs are described in the literature (see for example S. Zimmermann et al., Sensors and Actuators B 83 (2002) 285 and the references cited therein).

In a preferred embodiment, there are two channels directed towards one another, the combustible gas being supplied to the combustion chamber through one of them and the oxidant through the other.

Another preferred embodiment is distinguished in that the channels open into the combustion chamber while being arranged in the shape of a star. The gases therefore collide in the combustion chamber not from only two sides, but from a plurality of sides, and this can be used to control the flame or make it more uniform. In contrast to cases in which combustible gas and oxidant collide from opposite directions, the net momentum of the colliding gases can then even be made zero.

If for example oxygen and twice the amount of hydrogen collide, in order to be burnt as oxyhydrogen gas, then owing to its higher molecular weight the oxygen has a greater momentum than the hydrogen, so that the momenta do not add up to zero. With a star-shaped arrangement, however, the gases can be made to collide from a plurality of sides, with two oxidant flows and two combustible gas flows always being made to collide from exactly opposite directions, so that the total momentum adds up to zero. A particularly good spherical shape is thus obtained, and therefore so is a particularly high temperature of the flame.

Expediently, with the star-shaped arrangement, the channels are directed towards the centre of the combustion chamber so that the momenta of the incoming gas flows add up to zero. It is, however, also possible to direct the channels tangentially onto the circumference of an imaginary cylinder which is arranged coaxially in the combustion chamber. In this way, a vortex-shaped flame is obtained.

Momentum compensation can, however, also be achieved by combustible gas and oxidant colliding from opposite directions. If the sample to be analyzed is air, 80% of which consists of nitrogen as is known, the air to be analyzed may be mixed with a hydrogen combustible gas. This gas mixture then has approximately the same molecular weight as the oxygen supplied from the opposite direction. With the star-shaped arrangement, an oxygen excess is even possible in this case, which gives a higher ion yield.

A further measure for increasing the flame stability consists in adapting the velocities of the gas flows to one another so that the momenta of the colliding gases add up to zero. For example, oxygen may be fed into the combustion chamber with a lower velocity than hydrogen. Differences in the gas velocities can be achieved in particular by the channels having different cross sections in the end region directed towards the combustion chamber, for example a larger cross section in the channels intended for oxygen than in the channels intended for hydrogen.

In a preferred embodiment, the upper and lower substrates fully seal the central substrate so that all gases enter and leave the combustion chamber in the plane of the central substrate. In another preferred embodiment, the upper and lower substrates have bores leading to the combustion chamber, through which gas can enter and leave in a direction perpendicular to the plane of the substrate. In this case, of course, two openings must respectively lie opposite one another so that the gas can enter or exit through the two openings in opposite directions.

All the embodiments mentioned have the advantage that they function independently of position. Thus, they do not need to be aligned accurately for operation and can even be turned upside down.

The counterflow burner does not essentially consist of capillaries, like the systems of the prior art, but of planar structures. These can be processed particularly well, in particular by microsystem technology methods, so that very small structures can be obtained in mass production.

The central substrate contains the combustion chamber from which channels lying in the plane of the substrate lead to the edge of the substrate, preferably in opposite directions. The channels can be formed in any desired way in the central substrate with the aid of microsystem technology. They may also be configured in this case in such a way that heat exchangers are formed by providing the waste gas channels very close to the channels for the combustible gas and/or the oxidant, at least at the edge of the central substrate.

The thickness of the central substrate preferably lies in the range of from 250 µm to 1000 µm, particularly preferably in the range of from 300 µm to 700 µm and particularly preferably in the range of from 400 µm to 600 µm.

The central substrate advantageously consists of silicon, which can be processed particularly well with the aid of microsystem technology. The initially open channels and the open combustion chamber, which can be produced by the known microsystem technology methods, are at least essentially closed by the upper and lower substrates.

The upper substrate and/or the lower substrate preferably consist of borosilicate glass. On the one hand, this borosilicate glass can likewise be structured with the aid of microsystem technology. On the other hand it can be connected to silicon by an anodic bonding method, so that production of the counterflow burner according to the invention and the flame ionization detector according to the invention presents no problems. Furthermore, borosilicate glass also has a low thermal conductivity so that heat losses are reduced, which increases the flame stability and flame temperature.

As mentioned, the upper and lower substrates may also be structured by microsystem technology methods, for example in order to make the combustion chamber extend into these substrates or in order to increase the cross sections of the channels.

Microsystem technology also offers the advantage that other properties and shapes important for special applications can also be achieved.

Expediently, the channels for at least one of the gas flows are connected to a pressure equilibration chamber enclosing the counterflow burner, in order to ensure that the combustible gas and/or the oxidant actually enter through all channels, and waste gases exit, with the same velocity.

In an advantageous embodiment, elements which stabilize the flame are fitted on the upper and/or lower substrate in the combustion chamber. These may, for example, be cylindrical elements which enclose the actual flame in a cylindrical shape.

The counterflow burner used in the invention preferably comprises means for igniting the mixture of combustible gas and oxidant in the combustion chamber. It is, for example, conceivable to form opposing projections in the combustion chamber, between which an ignition spark can be generated.

The upper and/or lower substrate may be coated in the region of the combustion chamber with materials which initiate or accelerate the combustion, for example with platinum which can be applied by microsystem technology methods such as cathode sputtering or vapour deposition.

The flame preferably lies at a distance from the nozzles, so that only a small amount of heat is discharged through the nozzles. Experimental studies and simulations have shown that the flame burns at the so-called stagnation point, that is to say where the velocities of combustible gas and oxidant are negligibly small and mixing of the gases takes place as a result of diffusion. The counterflow burner is therefore preferably configured, and the gases are fed in, in such a way that the flame burns in the middle of the combustion chamber. Corresponding measures are mentioned in detail above.

The counterflow burner used in the invention permits lower gas velocities, in particular lower waste gas velocities, so that heat losses due to forced convection can be reduced. All of this contributes to increasing the flame temperature. In the case of a flame ionization detector a longer residence time in the combustion chamber is furthermore achieved for the sample gas to be analyzed.

The counterflow burner used in the invention can be used in a variety of ways. The counterflow burner may, for example, be used for flame spectrometry. Depending on the analysis method, either only an optical spectrometer (atomic emission spectrometer, chemiluminescence spectrometer) or alternatively a radiation source (atomic absorption spectrometry, atomic fluorescence spectrometry) will also be required. The counterflow microburner may also be employed, for example, for photometric gas chromatography and gas chromatography with measurement of the ionization generated. Corresponding devices can not only be used for scientific purposes but are also suitable, for example, for use in environmental technology to detect harmful gases.

For the flame ionization detector function, the planar counterflow burner is equipped with three electrodes: a measurement electrode and a back electrode, via which a voltage is applied and between which the ion current is measured, and a protective electrode which prevents the leakage current flowing through the gas from being recorded as well when measuring the ion current.

The measurement electrode and the protective electrode are preferably applied as thin films at the bottom of the combustion chamber on the lower substrate, whereas the side walls of the combustion chamber, which are formed by the electrically conductive central substrate, form the back electrode.

According to the invention, the back electrode further comprises a thin film applied at the top of the combustion chamber, on the upper substrate.

Normally, a flame ionization detector is operated with a high hydrogen flow rate with a tenfold amount of supporting air, which is needed owing to the oxygen demand and the shielding. In a planar microburner, the flame is shielded by the burner itself, so that supporting air can be obviated and the flame can be operated with oxyhydrogen gas (WO 2009/036854 Al). With the counterflow method according to the invention for the microburner, the hydrogen and oxygen consumption can be reduced even further without the flame losing its ionization power.

The small amounts of hydrogen and oxygen for operating the counterflow burner may, for example, be generated from aqueous solutions by means of electrolysis.

The volume flow rates of the combustible gas and the oxidant preferably have the same order of magnitude, i.e. they differ by less than a factor of 10. They particularly preferably differ by less than a factor of 5 and more particularly preferably by less than a factor of 3.

For the gas analysis, it is important to shield the flame from the environment in order to avoid spurious signals. To this end, the gas discharge openings must be made sufficiently small. In order to prevent a pressure rise in the combustion chamber, which impairs the flame stability, the gas may be pumped out. At the same time, the reduced pressure formed in the chamber may be used for the sample acquisition.

The invention will be described by way of example below with the aid of advantageous embodiments with reference to the appended drawings, in which:
- Figs 1-5: show five different embodiments of a counterflow burner for use in the invention in schematic views
- Fig. 6: shows a flame ionization detector according to the invention in a perspective representation
- Fig. 7: shows the FID represented in Fig. 6 in cross section from the side
- Fig. 8: shows the combustion chamber of an FID in cross section from above
- Fig. 9: shows the electric field lines in various combustion chambers with different electrode arrangements
- Fig. 10: shows a graphical representation of the electric field strengths of the combustion chambers shown in Fig. 9
- Fig. 11: shows a schematic representation of the production sequence of an FID according to the invention
- Fig. 12: shows false colour representation of photographic images of flames in various combustion chambers

### References

- 1: lower substrate (borosilicate glass)
- 2: central substrate (silicon)
- 3: upper substrate (borosilicate glass)
- 4: channels through which gases are fed into the combustion chamber or can exit from the combustion chamber
- 5: combustion chamber
- 10: measurement electrode (Pt)
- 20: back electrode
- 20a: back electrode as a layer on the top of the combustion chamber
- 20b: wall back electrode
- 30: protective electrode (Cr)
- 40: insulation layer (SiO₂)
- 60: bonding islands
- 70: nozzles/channel openings
- 80: ignition tips
- 90: alternative electrical connection position for back electrode
- 100: flame

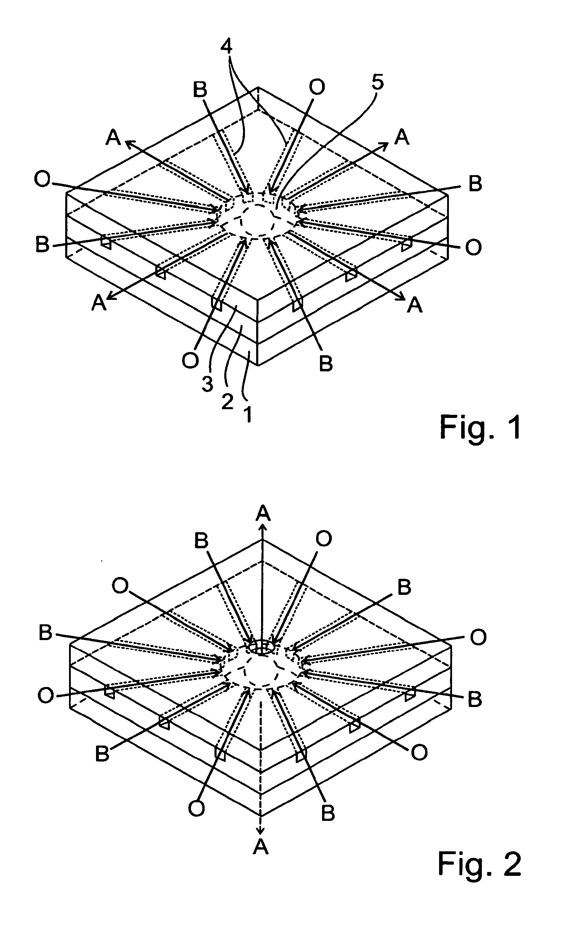

As shown in Figures 1-5, the counterflow burner for use in the invention comprises three substrates, namely a lower substrate (1) made of borosilicate glass, a central substrate (2) made of silicon and an upper substrate (3) made of borosilicate glass. The central substrate (2) contains channels 4 which are directed towards the combustion chamber (5) in the shape of a star. The gases respectively flow into the combustion chamber (5), and out of it, in the direction of the arrows. In this case, "B" denotes the flow directions of the combustible gases, "O" denotes the flow directions of the oxidant and "A" denotes the flow directions of the waste gases. In the embodiment of Figure 1, two combustible gas flows respectively collide, two oxidant flows respectively collide, and two oppositely directed waste gas flows A respectively leave the combustion chamber (5). In this way, the momentum of the flame is zero overall.

In the embodiment of Figure 2, combustible gases B and oxidants O also collide in the combustion chamber (5) from opposite directions through the channels. The waste gases leave the combustion chamber in a direction perpendicular to the plane of the substrate through corresponding openings, this being indicated by the dashed arrows A.

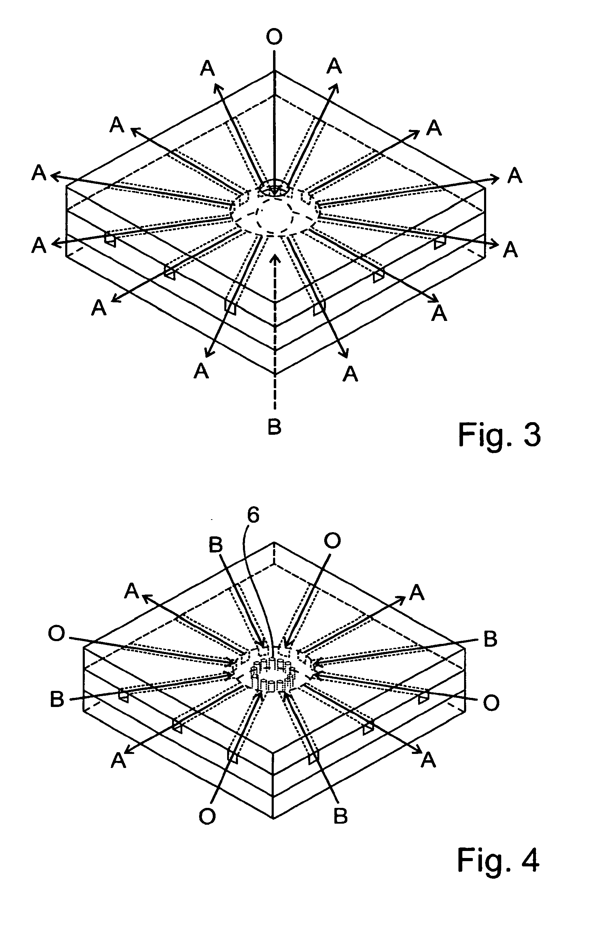

In the embodiment of Figure 3, combustible gas B and oxidant O respectively from above and below collide in the combustion chamber in a direction perpendicular to the plane of the substrate, whereas the waste gas A leaves the combustion chamber through the channels in the central substrate (2).

In the embodiment of Figure 4, two combustible gas flows collide, two oxidant flows collide and two waste gas flows A leave the combustion chamber (5) in opposite directions, again as in the embodiments of Figures 1 and 2. In addition, however, small cylinders arranged on the lower substrate (1) or the upper substrate (3) are also provided, which enclose the actual space in which the combustion takes place. These upright cylinders are arranged along a cylindrical surface around the centre of the combustion chamber.

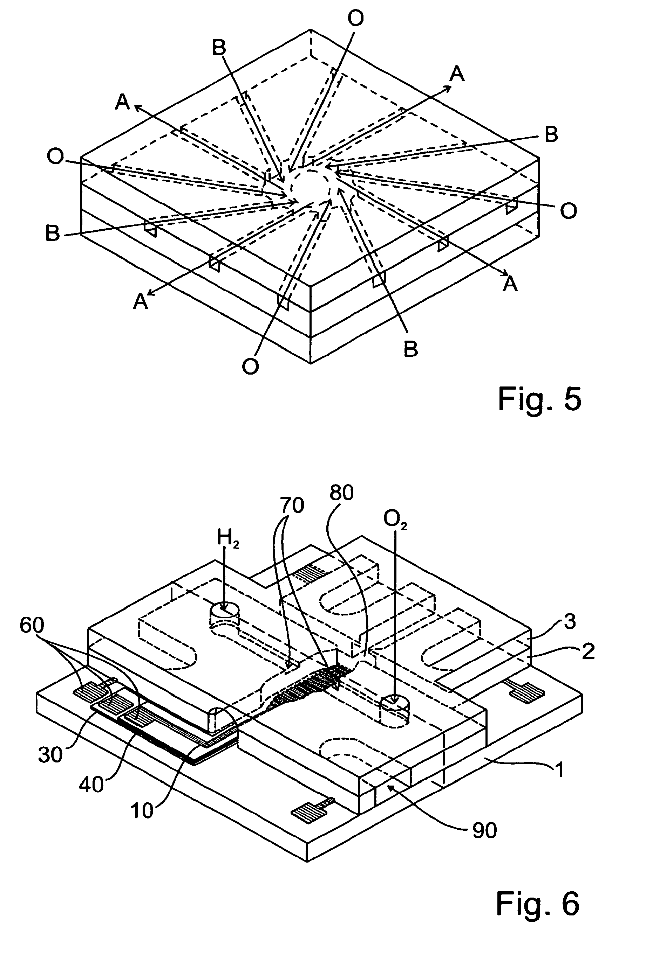

In the embodiment of Figure 5, the gases are not directed towards the centre of the combustion chamber 5 or away from it, but enter it tangentially so that a stable flame vortex is generated. As mentioned above, the star-shaped arrangement has certain advantages. Many other cases, however, will avoid this star-shaped arrangement and, for example, use only two channels directed towards one another from opposite directions, through which on the one hand combustible gas and on the other hand oxidant are supplied.

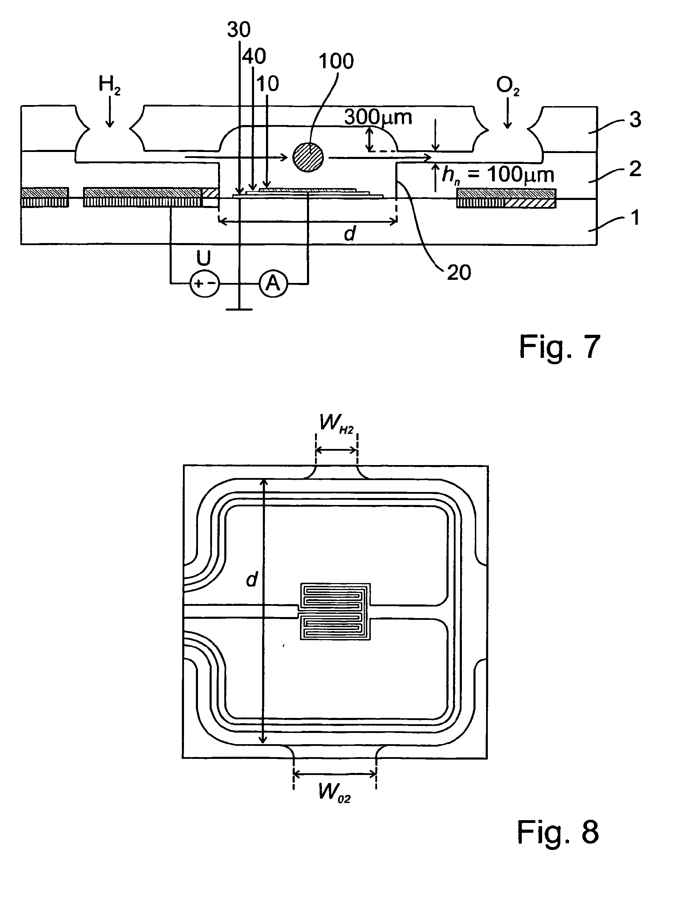

Figure 6 schematically shows an FID according to the invention in perspective representation. Figure 7 shows the same FID, this time in cross section along the dashed line in Figure 6. The sample to be analyzed is preferably supplied to the combustion chamber together with the combustible gas (hydrogen). The oxidant (oxygen) is introduced into the combustion chamber separately from the combustible gas. When the sample to be analyzed is mixed with the combustible gas, in principle only two gas inlets are required in order to produce a counterflow burner. In the present example, the inputs for the gases are achieved by vertical etchings through the upper glass substrate.

An ignition spark can be generated between two opposite projections. The distance between the projections is 300 µm in this case.

The counterflow diffusion flame burns in the silicon plane of a glass-silicon-glass sandwich.

The waste gas opening is small and therefore prevents contamination of the combustion chamber by the ambient air. Sizeable amounts of supporting air, which are intended to shield the flame in conventional systems, can be obviated; the FID according to the invention can be operated merely with oxygen and hydrogen.

Stable counterflow flames with a sensitivity of 3.6 mC/gC can be achieved with low hydrogen flow rates of 5 ml/min.

In the present example, the silicon wafer has a thickness of 500 µm, the height *hₙ* of the nozzle for introducing the gases is 100 µ and the depth of the cavity in the upper glass substrate for forming the combustion chamber is 300 µm The lateral dimensions of the FID are 8 mm x 8 mm.

The bias voltage is applied between a silicon back electrode and a platinum measurement electrode, the latter placed on the lower glass substrate. A thin platinum layer, which is applied onto the upper glass substrate in the cavity, could likewise function as a measurement electrode.

At high temperatures, borosilicate glass, which is used as a preferred material, becomes electrically conductive so that leakage currents can occur. These can be captured by a protective electrode. In the present example, the protective electrode is produced as a thin chromium film below the measurement electrode and an insulating silicon oxide layer.

Figure 8 shows a combustion chamber from above. The width of the combustion chamber is denoted by d. Starting from a corner of the figure and going in the direction of the middle, the silicon wall of the chamber is represented first. This is followed by the lower glass substrate, a chromium protective electrode, silicon oxide insulation and a platinum measurement electrode, which is also configured as a temperature sensor. In Figure 8, the platinum measurement electrode consists of two halves which are connected by a structure in the shape of a meander having a temperature-dependent resistance. In this way, the temperature of the lower glass substrate can be measured in addition to the ion current.

### Production of an FID According to the Invention

The production of the flame ionization detector according to the invention in Figs 6 and 7 is described by way of example below.

The production is carried out by using known microfabrication techniques, i.e. the structures of the counterflow burner according to the invention and the FID according to the invention are preferably, like many microsystems, produced in a silicon-glass technology. It is also conceivable to produce the structures of the pump according to the invention in a silicon-silicon or glass-glass technology.

The production of structures in microsystems is known to the person skilled in the art of microsystem technology. Microfabrication techniques are described and illustrated for example in the book "Fundamentals of Microfabrication" by Marc Madou, CRC Press Boca Raton FLA 1997 or in the book "Mikrosystemtechnik für Ingenieure" [Microsystem technology for engineers] by W. Menz. J. Mohr and O. Paul, Wiley-VCH, Weinheim 2005. A more detailed description of silicon-silicon technology may be found for example in Q.-Y. Tong, U. Gösele: Semiconductor Wafer Bonding: Science and Technology; The Electrochemical Society Series, Wiley-Verlag, New York (1999). With regard to glass-glass technology, reference may be made for example to the following publications: J. Wie et al., Low Temperature Glass-to-Glass Wafer Bonding, IEEE Transactions on advanced packaging, Vol. 26, No. 3, 2003, pages 289-294; Duck-Jung Lee et al., Glass-to-Glass Anodic Bonding for High Vacuum Packaging of Microelectronics and its Stability, MEMS 2000, The Thirteenth Annual International Conference on Micro Electro Mechanical Systems, 23-27 January 2000, pages 253-258.

Microsystem technologies are fundamentally based on the structuring of silicon or glass substrates with a high aspect ratio (for example narrow trenches (~µm) of large depth (~100µm)) with structural accuracies in the micrometre range by wet chemical, preferably plasma, etching processes combined with glass substrates containing sodium (for example Pyrex^{®}) matched in terms of their thermal expansion coefficient, which are provided with simple etched structures and are connected to one another in a hermetically sealed fashion preferably directly by so-called anodic bonding, or alternatively with a thin Au layer functioning as a solder alloy (AuSi).

Metal structures with a high aspect ratio can be produced by electrodeposition growth in thick photoresists (> 100µm) with comparable accuracy (UV-LIGA). By using thin film technologies such as high-vacuum evaporation and cathode sputtering, PVD production processes or chemical vapour deposition (CVD processes) preferably in a plasma, in combination with photolithography and etching techniques, functional layers such as metallizations, hydrophobic or hydrophilic surfaces and functional elements such as valve seals and membranes, heating elements, temperature, pressure and flow sensors can be integrated on these substrates in a fully process-compatible technology.

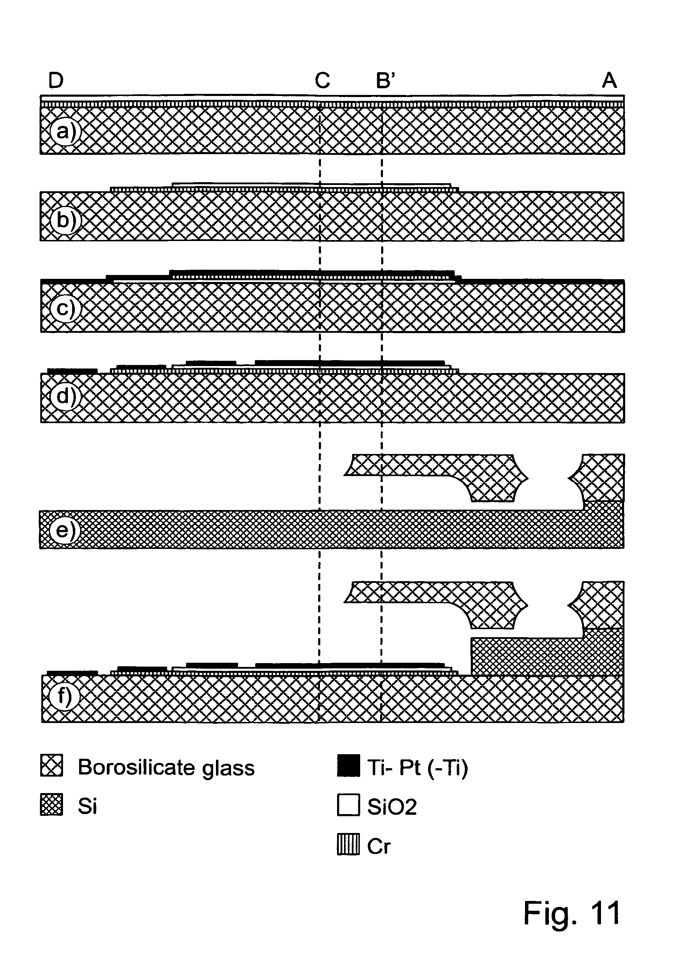

Fig. 11 shows the production sequence of the FID shown in Figures 6 and 7. The starting point (Fig. 11 a)) is the lower substrate of borosilicate glass (500 µm thick), onto which a 100 nm thick Cr layer and a 500 nm thick SiO₂ layer are applied by means of sputter deposition. The Cr layer and the SiO₂ layer are structured by means of photolithographic methods and etching processes (Fig. 11b)). Subsequently, a 200 nm thick Pt layer is applied (Fig. 11 c)) and is likewise structured.

Ti layers are used as a bonding layer and cover layer for the Pt layer. The thickness of the bonding layer is 150 nm, and the thickness of the cover layer is 250 nm.

The Pt layer is structured and the Ti layers are removed (Fig. 11 d)).

The central layer consists of heavily doped (0.01-0.02 Q·cm) silicon (500 µm thick). Nozzles with a depth of 100 µm are introduced into the silicon substrate.

Structures for the supply of gases and the combustion chamber (depth of the structure for the combustion chamber 300 µm) are introduced into the upper substrate, which likewise consists of borosilicate glass (500 µm thick).

The individual substrates are finally connected to one another (Fig. 11 e), f)).

### Electrostatic Simulation of Electrode Arrangements

The electric fields of various electrode arrangements were simulated with the aid of a finite element model (FEM). The two-dimensional model was set up using Comsol Multiphysics.

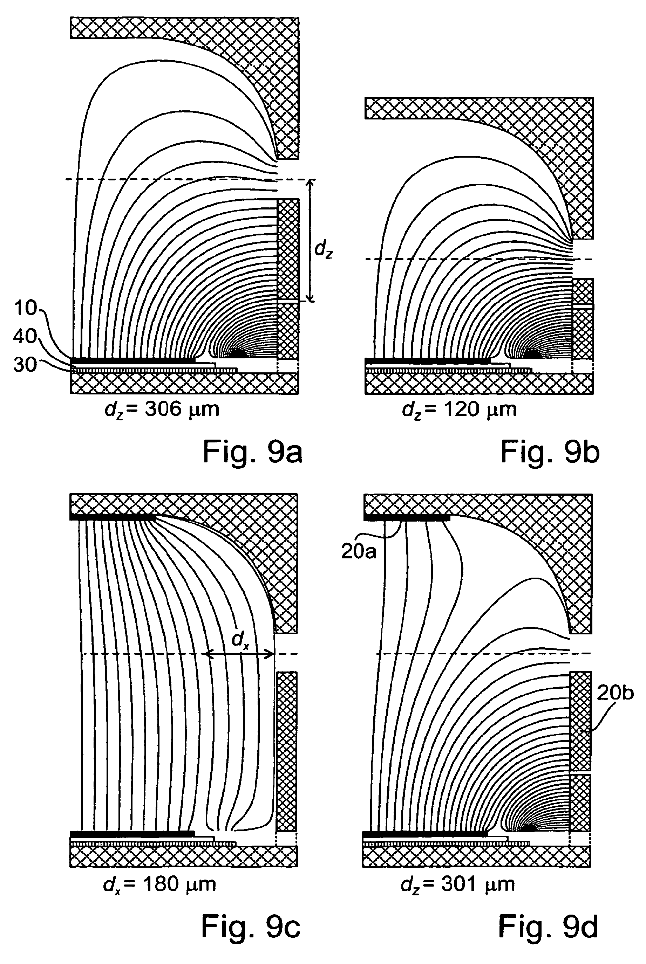

Figures 9 a), b), c) and d) respectively show half of a combustion chamber in cross section. Since the combustion chambers are respectively symmetrical, the field line arrangement in the other half which is not shown is obtained by reflection through a mirror axis which extends vertically through the middle of the combustion chamber.
In all cases, the width *d* of the combustion chamber is 1 mm. The electric field lines are represented for various electrode arrangements and combustion chamber geometries. The measurement electrode and the protective electrode respectively lie at the bottom of the combustion chamber on the lower glass substrate. In Figures 9 a) and b), the back electrode is formed by the side wall of the combustion chamber (central substrate). In Figure 9 a), the height of the vertical wall back electrode is 500 µm, and in Figure 9 b) it is 300 µm. In Figure 9 c), a thin film in the cavity on the upper glass substrate functions as a back electrode, whereas in Figure 9 d) both the wall and an upper thin film function as the back electrode, according to the invention.

The vertical distance between the middle of the nozzle (dashed line) and the first field line to be deflected onto the back electrode is denoted as *d_{z}* (see white horizontal bar on the back electrode). The horizontal distance between the nozzle opening and the first field line to be deflected onto the measurement electrode is denoted as *dₓ*.

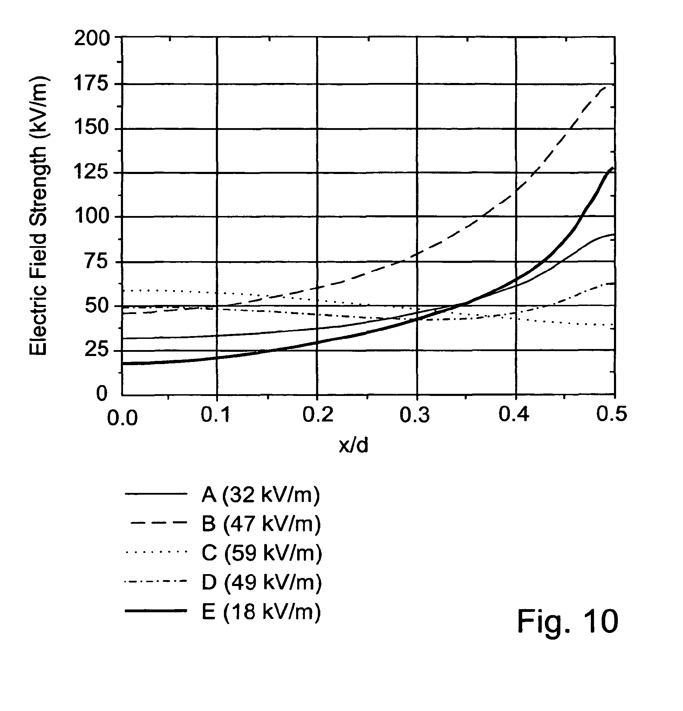

Fig. 10 represents the electric field strengths along the dashed lines in Figures 9 a) to d). The distance x from the middle of the combustion chamber, normalized to the width *d* of the combustion chamber, is plotted on the abscissa. The electric field strength is plotted on the ordinate.

The line denoted by the letter A represents the field strength in a combustion chamber according to Fig. 9 a).
The line denoted by the letter B represents the field strength in a combustion chamber according to Fig. 9 b).
The line denoted by the letter C represents the field strength in a combustion chamber according to Fig. 9 c).
The line denoted by the letter D represents the field strength in a combustion chamber according to Fig. 9 d).
The line denoted by the letter E represents the field strength in a combustion chamber according to Fig. 9 a), but with *d* having a value of 2 mm instead of 1 mm.

It can be seen from Fig. 10 that the greatest electric field strength of *E*₀=59 kV·m⁻¹ is exerted in the middle of the combustion chamber when the measurement and back electrodes are arranged opposite as in Fig. 9 c). From Figure 9 c), however, it can be seen that charged particles which are generated at a distance of up to 180 µm (*dₓ*) from the nozzle opening are deflected onto the protective electrode and therefore do not contribute to the measured ion current.
Although, with a value of 49 kV·m⁻¹, *E*₀ in the case of the arrangement in Fig. 9 d) is somewhat less than in the case of the arrangement Fig. 9 c), all charged particles which are generated on the dashed line are deflected onto the measurement electrode. At a distance of 120 µm from the nozzle opening, the field strength in an arrangement as in Fig. 9 d) is in fact higher than in the case of Fig. 9 c).

By reducing the vertical height of the wall back electrode from 500 µm (Fig. 9 a)) to 300 µm (Fig. 9 b)), *E*₀ is increased from 32 kV·m⁻¹ to 47 kV·m⁻¹. At the same time, however, *d_{z}* is reduced from 310 to 120 µm, i.e. a greater proportion of charged particles could be deflected onto the protective electrode. Furthermore, reducing the silicon substrate thickness from 500 µm (Fig. 9 a)) to 300 µm (Fig. 9 b)) could lead to the hot hydrogen flame causing damage.

An electrode arrangement as shown in Fig. 9 d) is therefore preferred, according to the invention.

### Sensitivity Measurements for Various Combustion Chamber Geometries

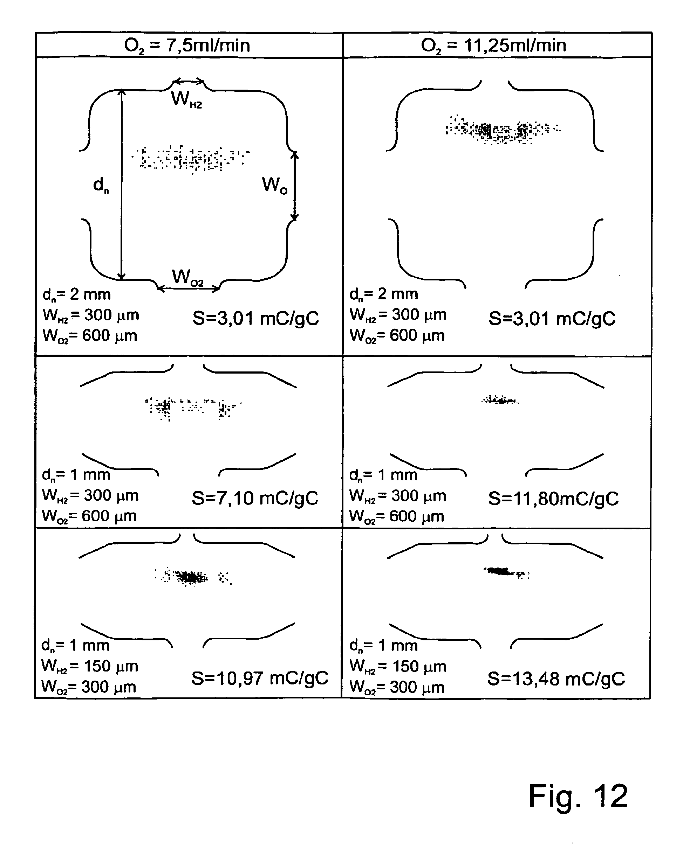

Fig. 12 summarizes the results of studies into the sensitivity of an FID according to the invention according to Figs 6 and 7.
The figures show the brightness of the flame and the sensitivity of the FID as a function of the microburner geometry and the oxygen flow rate.
A maximum sensitivity is achieved with a small chamber (distance between nozzles = 1 mm), small nozzles (hydrogen nozzle cross section = 100 µm x 150 µm; oxygen nozzle cross section = 100 µm x 300 µm) and high oxygen flow rate (11.25 ml/min). The following applies for all the studies: cross section for the waste gas outlet 100µm x 700 µm; H₂ = 7.5 ml/min; 1% CH₄ in N₂ = 2.0 ml/min.
Hydrogen is respectively delivered from above, and oxygen from below. The waste gas exits laterally.

The brightness of the flame was determined by taking photographic images with a standard digital camera. In the figures, black means the greatest brightness of the flame.

## Claims

1. Flame ionization detector comprising:
a counterflow burner having a combustion chamber which can be supplied with a combustible gas and an oxidant from opposite sides, wherein the counterflow burner comprises three planar substrates which are connected together while lying above one another, and wherein the central substrate comprises the combustion chamber into which at least two channels lead from opposite directions, the openings of the channels in the combustion chamber having a distance of less than 3 mm between them;
a measurement electrode, a protective electrode and a back electrode, the electrodes being arranged in the combustion chamber of the counterflow burner, the measurement electrode and the protective electrode being applied at the bottom of the combustion chamber on the lower substrate;
means for measuring an ion current between the measurement electrode and the back electrode;
wherein the back electrode consists of the side walls of the combustion chamber, which are formed by the central substrate, and a further electrode applied at the top of the combustion chamber, opposite the measurement electrode, on the upper substrate.

2. Flame ionization detector according to Claim 1, **characterized in that** the size of the openings of the channels into the combustion chamber lies in the range of from 0.005 mm² to 0.08 mm².

3. Flame ionization detector according to Claim 1 or 2, **characterized in that** a plurality of channels lead into the combustion chamber while being arranged in the shape of a star.

4. Flame ionization detector according to one of Claims 1 to 3, **characterized in that** it comprises structures which preheat the gases which are supplied to the counterflow burner, by means of waste gases which leave the counterflow burner.

5. Method for the analysis of a sample gas using a flame ionization detector according to any of claims 1 to 4, wherein the sample gas is mixed with a combustible gas, preferably hydrogen, and the resulting gas mixture is fed into the combustion chamber, and wherein an oxidant, preferably oxygen, is likewise fed into the combustion chamber from the opposite side, so that the momenta of the gases colliding in the middle of the combustion chamber cancel each other out and the gases burn in a flame in the middle of the combustion chamber, the amount of ions contained in the flame being measured in the form of an ion current between the measurement electrode and the back electrode.

6. Method according to Claim 5, **characterized in that** the flame has a spherical shape.

7. Method according to Claim 5 or 6, **characterized in that** the volume flow rates of the combustible gas and the oxidant have the same order of magnitude.

## Patentansprüche

1. Flammenionisationsdetektor, der Folgendes umfasst:
einen Gegenstrombrenner, der eine Brennkammer hat, die mit einem brennbaren Gas und einem Oxidationsmittel von entgegengesetzten Seiten her versorgt werden kann, wobei der Gegenstrombrenner drei planare Substrate aufweist, die miteinander verbunden sind, wobei sie übereinanderliegen, und wobei das zentrale Substrat die Brennkammer umfasst, in die mindestens zwei Kanäle von entgegengesetzten Richtungen führen, wobei die Öffnungen der Kanäle in der Brennkammer eine Entfernung von weniger als 3 mm zwischeneinander haben,
eine Messelektrode, eine Schutzelektrode und eine Rückelektrode, wobei die Elektroden in der Brennkammer des Gegenstrombrenners angeordnet sind, wobei die Messelektrode und die Schutzelektrode an dem Boden der Brennkammer auf dem unteren Substrat angelegt sind,
Mittel zum Messen eines Ionenstroms zwischen der Messelektrode und der Rückelektrode,
wobei die Rückelektrode aus den Seitenwänden der Brennkammer besteht, die durch das zentrale Substrat gebildet sind, und eine weitere Elektrode, die an der Oberseite der Brennkammer, der Messelektrode gegenüberliegend, auf dem oberen Substrat angelegt wird.

2. Flammenionisationsdetektor nach Anspruch 1, **dadurch gekennzeichnet, dass** die Größe der Öffnungen der Kanäle in die Brennkammer in dem Bereich von 0,005 mm² bis 0,08 mm² liegt.

3. Flammenionisationsdetektor nach Anspruch 1 oder 2, **dadurch gekennzeichnet, dass** mehrere Kanäle in die Brennkammer führen, wobei sie in der Form eines Sterns angeordnet sind.

4. Flammenionisationsdetektor nach Anspruch 1 bis 3, **dadurch gekennzeichnet, dass** er Strukturen umfasst, die die Gase, die zu dem Gegenstrombrenner geliefert werden, mittels Abgasen, die den Gegenstrombrenner verlassen, vorheizen.

5. Verfahren zur Analyse einer Gasprobe unter Verwendung des Flammenionisationsdetektors nach einem der Ansprüche 1 bis 4, wobei die Gasprobe mit einem brennbaren Gas, vorzugsweise mit Wasserstoff gemischt ist, und das resultierende Gasgemisch in die Brennkammer gespeist wird, und wobei ein Oxidationsmittel, vorzugsweise Sauerstoff, ebenfalls in die Brennkammer von der entgegengesetzten Seite gespeist wird, so dass die Momente der Gase, die in der Mitte der Brennkammer zusammenprallen, einander annullieren und die Gase in einer Flamme in der Mitte der Brennkammer brennen, wobei die Menge an Ionen, die in der Flamme enthalten sind, in der Form eines Ionenstroms zwischen der Messelektrode und der Rückelektrode gemessen wird.

6. Verfahren nach Anspruch 5, **dadurch gekennzeichnet, dass** die Flamme eine Kugelform hat.

7. Verfahren nach Anspruch 5 oder 6, **dadurch gekennzeichnet, dass** die Volumenströme des brennbaren Gases und das Oxidationsmittel dieselbe Größenordnung haben.

## Revendications

1. Détecteur à ionisation de flamme comprenant :
un brûleur à contre-courant ayant une chambre de combustion qui peut être alimentée avec un gaz combustible et un oxydant depuis des côtés opposés, le brûleur à contre-courant comprenant trois substrats planaires qui sont reliés ensemble tout en se trouvant les uns au-dessus des autres, et le substrat central comprenant la chambre de combustion dans laquelle conduisent au moins deux canaux depuis des directions opposées, les ouvertures des canaux dans la chambre de combustion ayant une distance de moins de 3 mm entre elles ;
une électrode de mesure, une électrode protectrice et une électrode arrière, les électrodes étant disposées dans la chambre de combustion du brûleur à contre-courant, l'électrode de mesure et l'électrode protectrice étant appliquées au fond de la chambre de combustion sur le substrat inférieur ;
un moyen pour mesurer un courant ionique entre l'électrode de mesure et l'électrode arrière ;
dans lequel l'électrode arrière est composée des parois latérales de la chambre de combustion, qui sont formées par le substrat central, et d'une autre électrode appliquée au sommet de la chambre de composition, à l'opposé de l'électrode de mesure, sur le substrat supérieur.

2. Détecteur à ionisation de flamme selon la revendication 1, **caractérisé en ce que** la taille des ouvertures des canaux dans la chambre de combustion se situe dans la gamme de 0,005 mm² à 0,08 mm².

3. Détecteur à ionisation de flamme selon la revendication 1 ou 2, **caractérisé en ce qu'**une pluralité de canaux conduit dans la chambre de combustion tout en étant disposée sous la forme d'une étoile.

4. Détecteur à ionisation de flamme selon une des revendications 1 à 3, **caractérisé en ce qu'**il comprend des structures qui préchauffent les gaz avec lesquels on alimente le brûleur à contre-courant, au moyen d'effluents gazeux qui quittent le brûleur à contre-courant.

5. Procédé d'analyse d'un gaz échantillonné à l'aide d'un détecteur à ionisation de flamme selon l'une quelconque des revendications 1 à 4, dans lequel le gaz échantillonné est mélangé avec un gaz combustible, de préférence de l'hydrogène, et le mélange gazeux résultant est introduit dans la chambre de combustion, et dans lequel un oxydant, de préférence de l'oxygène, est de même introduit dans la chambre de combustion depuis le côté opposé, de telle sorte que les moments des gaz entrant en collision au milieu de la chambre de combustion s'annulent et les gaz brûlent dans une flamme au milieu de la chambre de combustion, la quantité d'ions contenus dans la flamme étant mesurée sous la forme d'un courant ionique entre l'électrode de mesure et l'électrode arrière.

6. Procédé selon la revendication 5, **caractérisé en ce que** la flamme a une forme sphérique.

7. Procédé selon la revendication 5 ou 6, **caractérisé en ce que** les débits volumiques du gaz combustible et de l'oxydant ont le même ordre de grandeur.
